# DEMANDE DE BREVET EUROPEEN

(11) **EP 0 829 581 A2**
(43) Date de publication de la demande: **18.03.1998**
(21) Numéro de dépôt: 97400973.0
(22) Date de dépôt: 30.04.1997
(51) Int. Cl.: E01F 9/012

(54) **Panneau de signalisation routière temporaire**

(30) Priorité: 12.09.1996 FR 9611118
(71) Demandeur: Techniques Nouvelles, 76420 Bihorel (FR)
(72) Inventeur: Claude, Alain, 76690 Le Bocasse (FR)
(74) Mandataire: Renaudie, Jacques

(57) **Abrégé**

L'invention a pour objet un panneau de signalisation routière verticale temporaire, constitué d'un corps (1) formant à la fois le support (2) et le subjectile (3), ou élément support de décor, dont la partie inférieure de support est prolongée du côté opposé à la face de signalisation par un bac (4) permettant de contenir un lestage suffisant pour assurer la stabilité du panneau, l'ensemble ayant une forme qui permet l'emboîtement de panneaux identiques.
suivant l'invention, la partie supérieure du subjectile (3) comporte une poignée (5) venue de moulage avec l'ensemble du corps (1), ainsi que -du côté intérieur- des tubes (6, 7, 8) également venus de moulage, débouchant vers l'extérieur pour permettre l'implantation de fanions.

## Description

La présente invention a pour objet un panneau de signalisation routière temporaire ; plus précisément, elle concerne un panneau mobile et portable de signalisation verticale.

L'augmentation considérable de la circulation routière a entraîné un développement correspondant de la signalisation pour apporter aux conducteurs des informations claires et rapides sur les conditions du trafic. Compte tenu des distances parcourues par les véhicules actuels, il a fallu rendre toutes ces informations cohérentes sur des territoires de plus en plus étendus. C'est ainsi qu'en France plusieurs normes ont été homologuées, et notamment :
- NF P 98-501 (mars 1991) « signalisation routière verticale - généralités »
- NF P 98-540 (juin 1991) « signalisation routière verticale temporaire - panneaux et supports ».

Suivant la première norme, la signalisation temporaire est destinée « à signaler et à renseigner sur des conditions temporaires de circulation, obstacles, dangers fortuits, mesures non permanentes d'exploitation du trafic, chantiers fixes, chantiers mobiles ».

On rappellera ici qu'un panneau est composé des éléments suivants : le « décor » qui est « l'élément graphique, pictogramme ou texte qui traduit l'information» ; le « subjectile » qui est l'élément support du décor ; le « support » constitué par « l'ensemble des éléments permettant l'érection des panneaux de signalisation sur site ».

Le paragraphe 7.3.3. de la seconde norme définit les supports mobiles :

« Cette catégorie de supports doit permettre la mise en place de signalisation aux abords de chantiers de courte durée ou amenés à se déplacer dans le temps. La conception de ces supports doit permettre une manipulation aisée, le chargement facile à bord de véhicule, une bonne stabilité au vent ou lors de passage de véhicules, une non-agressivité en cas de choc avec un mobile quel qu'il soit (piéton, deux roues, voiture ou camion), tout en garantissant une bonne visibilité ou lisibilité.

Pour satisfaire à ces critères, les supports mobiles devront résister à des sollicitations de vent, assurer la stabilité de l'ensemble, soit par leur poids propre, soit par l'adjonction de lests, assurer la sécurité en cas de choc ou d'écrasement, en se déformant sans rupture agressive et permettant le glissement dans le cas où ils resteraient accrochés au mobile, ce critère excluant tout ancrage ; être fixés mécaniquement au subjectile ; avoir des dimensions horizontales dans le plan du signal inférieures ou égales au signal qu'ils supportent. »

De tels supports mobiles sont déjà connus, par exemple, par le brevet français 2 669 657 (J. OLLIVIER) ; ce brevet décrit un piétement formé de deux tronçons de tube perpendiculaires au panneau et orientés pour reposer sur le sol par une de leurs génératrices, et pour recevoir à l'intérieur un élément de lestage sensiblement cylindrique ; cet élément est constitué, par exemple, d'un sac de sable.

L'inconvénient d'un tel support réside dans la mise en place des deux sacs de sable cylindriques dans les tronçons de tube ; en effet, cette mise en place est mal aisée et si elle n'est pas faite correctement, le panneau manque de stabilité.

La demanderesse a déposé une demande de brevet français n° 95-00245 le 11 Janvier 1995 pour un panneau de signalisation routière verticale temporaire, constitué d'un corps formant à la fois le support et le subjectile, caractérisé en ce que la partie inférieure du support est prolongée du côté opposé à la face de signalisation par un bac permettant de contenir un lestage suffisant pour assurer la stabilité du panneau, l'ensemble ayant une forme permettant l'emboîtement de panneaux identiques, et des logements étant prévus à la surface du panneau pour permettre sa manutention.

La présente invention a pour objet un perfectionnement apporté à ce panneau pour en faciliter encore la manutention, et pour lui permettre de supporter facilement des fanions destinés à attirer l'attention des conducteurs.

Suivant l'invention, un panneau de signalisation routière verticale temporaire, constitué d'un corps formant à la fois le support et le subjectile, dont la partie inférieure du support est prolongée du côté opposé à la face de signalisation par un bac permettant de contenir un lestage suffisant pour assurer la stabilité du panneau, l'ensemble ayant une forme qui permet l'emboîtement de panneaux identiques est caractérisé en ce que la partie supérieure du subjectile comporte une poignée venue de moulage avec l'ensemble du corps, ainsi que - du côté intérieur - des tubes également venus de moulage, débouchant vers l'extérieur pour permettre l'implantation de fanions.

Dans une variante préférée de l'invention, le subjectile a une forme extérieure correspondant à la superposition des contours des décors réglementaires circulaires et triangulaires.

On va décrire ci-après un exemple de réalisation de l'invention, donné à titre non limitatif, en se référant au dessin annexé sur lequel :
figure 1 est une vue en perspective du panneau suivant l'invention ;
figure 2 est une vue de dos du panneau de la figure 1.

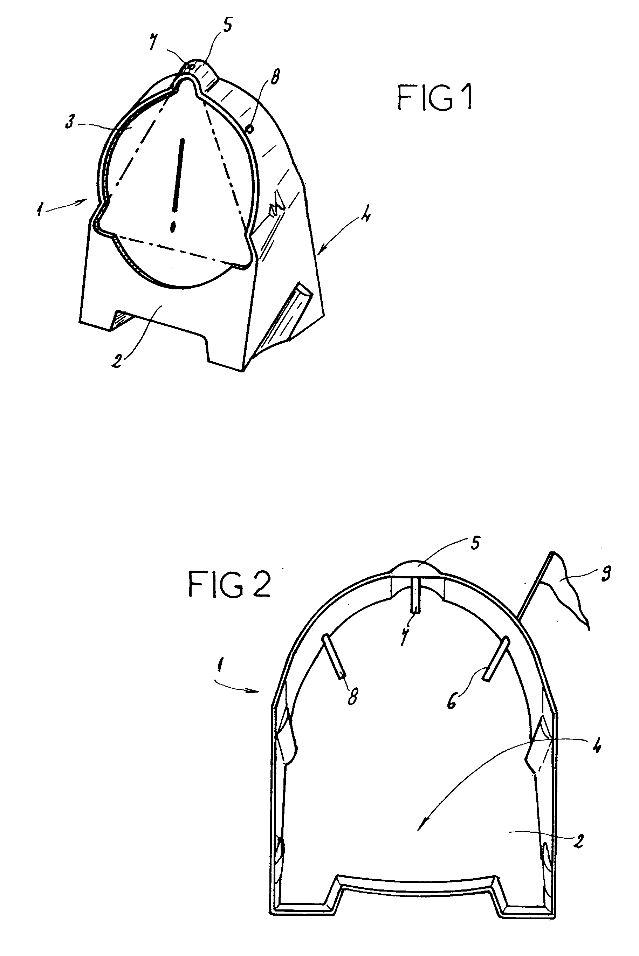

On voit sur cette figure 1 un panneau de signalisation routière verticale temporaire constitué d'un corps 1 formant à la fois le support 2 et le subjectile 3. La partie inférieure du support 2 est prolongée du côté opposé à la face de signalisation pour former un bac 4. Ce bac peut contenir un lestage, tel que du sable, des pierres, de la terre, etc... suffisant pour assurer la stabilité du panneau conformément aux normes en vigueur.

Le subjectile 3, ou élément support du décor, a une forme extérieure qui correspond à la superposition des contours des décors réglementaires circulaires et triangulaires, de manière à permettre l'apposition de ces différents décors : par exemple, un signal de danger triangulaire (trait mixte sur la figure 1), ou un signal de vitesse limite (circulaire).

L'ensemble 1 a une forme générale qui permet l'emboîtement de panneaux identiques les uns dans les autres (comme certaines chaises de lieux publics).

Suivant l'invention, la partie supérieure du subjectile 3 comporte une poignée 5 venue de moulage avec l'ensemble du corps 1.

D'autre part, comme on le voit sur la figure 2, la partie supérieure du subjectile 3 comporte, du côté intérieur, des tubes 6, 7 et 8, également venus de moulage, débouchant vers l'extérieur pour permettre l'implantation de fanions, tels que 9, destinés à attirer l'attention du conducteur.

Le panneau 1 peut être constitué de tout matériau plastique connu moulable ou injectable, tel que le polystyrène, ...

Les avantages de l'invention sont nombreux : le panneau est facile à déplacer à la main ; on peut en transporter et en stocker aisément un grand nombre sous un faible volume ; sa fabrication est peu onéreuse ; sa stabilité est obtenue instantanément et aisément avec les matériaux trouvés sur le chantier, matériaux que l'on peut ensuite abandonner sur place, etc...

## Revendications

1. Panneau de signalisation routière verticale temporaire constitué d'un corps (1) formant à la fois le support (2) et le subjectile (3), ou élément support de décor, dont la partie inférieure de support est prolongée du côté opposé à la face de signalisation par un bac (4) permettant de contenir un lestage suffisant pour assurer la stabilité du panneau, l'ensemble ayant une forme qui permet l'emboîtement de panneaux identiques, caractérisé en ce que la partie supérieure du subjectile (3) comporte une poignée (5) venue de moulage avec l'ensemble du corps (1), ainsi que - du côté intérieur - des tubes (6, 7, 8) également venus de moulage, débouchant vers l'extérieur pour permettre l'implantation de fanions.

2. Panneau de signalisation suivant la revendication 1, caractérisé en ce que le subjectile a une forme extérieure correspondant à la superposition des contours des décors réglementaires circulaires et triangulaires.
